# EUROPEAN PATENT SPECIFICATION

(11) **EP 0 239 171 B1**
(45) Date of publication and mention of the grant of the patent: **24.02.1993**
(21) Application number: 87200521.0
(22) Date of filing: 20.03.1987
(51) Int. Cl.: B01F 5/04, B01J 8/24

(54) **Apparatus and process for mixing fluids**
Apparat und Verfahren zum Mischen von Flüssigkeiten
Appareil et procédé pour mélanger des fluides

(30) Priority: 27.03.1986 GB 8607699
(43) Date of publication of application: 30.09.1987
(73) Proprietor: SHELL INTERNATIONALE RESEARCH MAATSCHAPPIJ B.V., 2596 HR Den Haag (NL)
(72) Inventor: Barnes, Peter Haddon, NL-2596 HR The Hague (NL)

(56) References cited:
- BE-A- 682 718
- FR-A- 2 125 506
- FR-A- 2 156 375
- FR-A- 2 392 712
- US-A- 2 695 265
- US-A- 3 671 025

## Description

The invention relates to an apparatus and a process for mixing fluids.

It is known to mix fluids such as a hydrocarbon oil and steam by using two concentrically arranged nozzles (i.c. tubes provided with a restricted opening at their downstream ends) of which the inner nozzle is used for introducing a hydrocarbon oil jet stream with a relatively small diameter into the converging space between the downstream ends of the inner and the outer nozzle, whereas steam is introduced through the annular space between the tubes into the converging space to form a mixture with the oil which is finally injected through the outer nozzle into a reactor.

However, mixing of a first fluid (hydrocarbon oil) (flowing through a central inner nozzle opening) with a second fluid (steam) in such a relatively small converging space will be far from optimal; the oil jet stream will proceed at least partly through the central outer nozzle opening without having been broken up and mixed with steam.

Furthermore, it is known to mix liquid hydrocarbons and gas by means of a nozzle assembly comprising an outer tube having a restricted outlet opening and an inner tube terminating at most one outer tube diameter from the outlet opening to provide a relatively small mixing zone. Liquid hydrocarbons flow through the annular space between the two tubes which space is provided with vanes in order to impart a tangential velocity to the liquid hydrocarbons. However, in this set-up the gas (e.g. steam) which flows through the inner tube with a relatively high velocity, will proceed at least partly as an unbroken stream through the centrally arranged outlet opening of the outer tube without having been mixed with liquid hydrocarbons.

Furthermore, in BE-A-682,718 an apparatus has been described for mixing different gases with each other for authermal flameless reaction. The apparatus comprises an outer tube, an inner tube and a diffuser. The inner tube is arranged in the top section of the outer tube and tapers downwardly towards the exit. The inner tube is provided with a twist member incorporating guide blades and a displacement member located in the inner tube and connected by a spindle with a adjusting mechanism by which the displacement member may be displaced axially in the inner tube. In this way the outlet cross section of the inner tube through which gas flows can be adjusted to the varying amount of gas in the inner tubes.

It has now been found that excellent mixing of fluid streams can be attained by providing a relatively large area for initial contact of the fluids to be introduced into the upstream end part of a tubular mixing section.

The invention therefore relates to an apparatus for fluid catalytic cracking of hydrocarbonaceous material which comprises a substantially vertically arranged tubular housing having a tubular mixing section arranged at least partly inside its bottom section, which tubular mixing section has in its upstream end part an annular inlet opening for a first fluid which comprises hydrocarbonaceous material defined inside substantially coaxially arranged inlet means for a second fluid which comprises steam and an outlet opening for a fluid mixture, characterized in that deflection means are provided at the upstream end part of the mixing section, which deflection means comprise an inverted at least partly frusto-conical body.

A major advantage of the apparatus according to the invention is that during operation thereof the first fluid stream is broken up substantially completely after entering the upstream end part of the tubular mixing section through an annular opening surrounded by the second fluid which effects shearing and atomizing of the first fluid stream.

The apparatus according to the invention can be advantageously employed, for instance, in catalytic cracking operations to provide a mixture of hydrocarbonaceous material and steam and to introduce said mixture into a riser reactor containing fluidized catalyst particles, thus mixing said particles rapidly, intimately and uniformly with the hydrocarbonaceous feed to be cracked. Accordingly, the invention further relates to an apparatus for fluid catalytic cracking of hydrocarbonaceous material which comprises a substantially vertically arranged tubular housing having a tubular mixing section as described hereinbefore arranged at least partly inside its bottom section. Such an apparatus may contain features of an apparatus for contacting particulate solids with a fluid as described in GB-A-8607698.

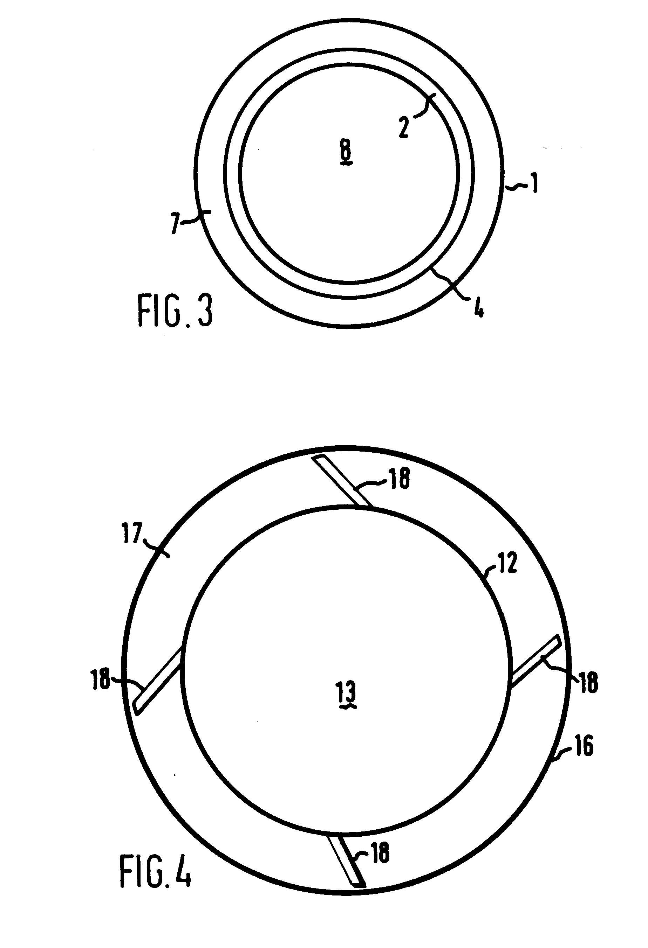

Preferred embodiments of the apparatuses according to the invention are described hereinafter, using Figures 1-4 in which reference numerals relating to corresponding parts are the same.

In Figure 1 a longitudinal section of a mixing apparatus is shown.

In Figure 2 a longitudinal section of the bottom part of a fluid catalytic cracking riser reactor comprising a mixing apparatus according to the present is shown.

Figure 3 represents a cross section at AA′ of the mixing apparatus as depicted in Figure 1.

Figure 4 represents a cross section at BB′ of the mixing apparatus arranged in the riser reactor section shown in Figure 2.

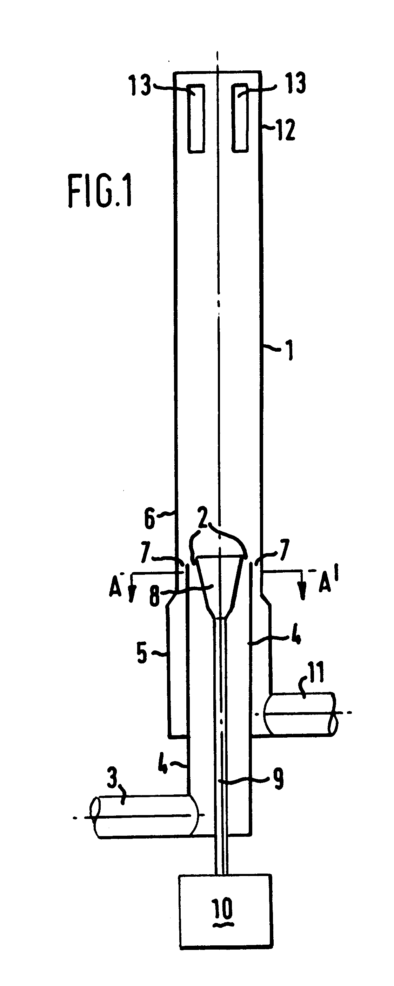

The apparatus as schematically depicted in Figure 1 comprises a tubular mixing section (1) having an annular inlet opening (2) for an upwardly directed stream of a first fluid (e.g a liquid) introduced through opening (3) into tubular liquid inlet means (4) which are preferably arranged substantially coaxially at least partly within the inlet means (5) for the second fluid (e.g. a gas).

Inlet means (5) preferably comprise a tube (which may have a greater diameter than tubular mixing section (1)) which is connected to the upstream end (6) of section (1) and to inlet (11) for the second fluid. Preferably, an annular inlet opening (7) for the second fluid is defined between the wall of tubular inlet means (5) and the annular inlet opening (2).

The annular inlet opening (2) is preferably defined between the tubular inlet means (4) and fixed or adjustable deflection means (8) arranged at least partly therein. In a particularly preferred embodiment of the apparatus according to the invention deflection means (8) are connected to axially adjustable positioning means (9) such as a rod which preferably extends outside the upstream end of tubular inlet means (4) and is connected to actuating means (10).

A major advantage of having adjustable deflection means (e.g. in the form of an inverted at least partly frusto-conical body) located (partly) inside the downstream end of tubular inlet means (4) is that thereby it is possible to vary the width of the annular inlet opening (2) and thus the velocity and in some cases also the direction of the annular stream of the first fluid flowing therethrough, in order to attain optimal shearing and atomizing of said fluid stream by the second fluid entering through annular opening (7).

The two fluids are subsequently mixed in the elongated tubular mixing section (1) which preferably has a length: diameter ratio of 2-25, and most preferably of 8-20, in order to attain excellent mixing and partial vaporization in case the first fluid is a liquid, and the apparatus according to the invention is operated at elevated temperature. The downstream part (12) of the tubular mixing section (1) may comprise a plurality of outlet openings (13) in order to distribute the resultant fluid mixture at least partly in a radial direction, which results in excellent mixing of said fluid mixture with liquid, gaseous and/or particulate solid material which may surround at least part of the apparatus according to the invention (the tubular mixing section (1)). The outlet openings (13) are preferably located at substantially equal distances from each other in the downstream part (12) of the wall of the tubular mixing section (1).

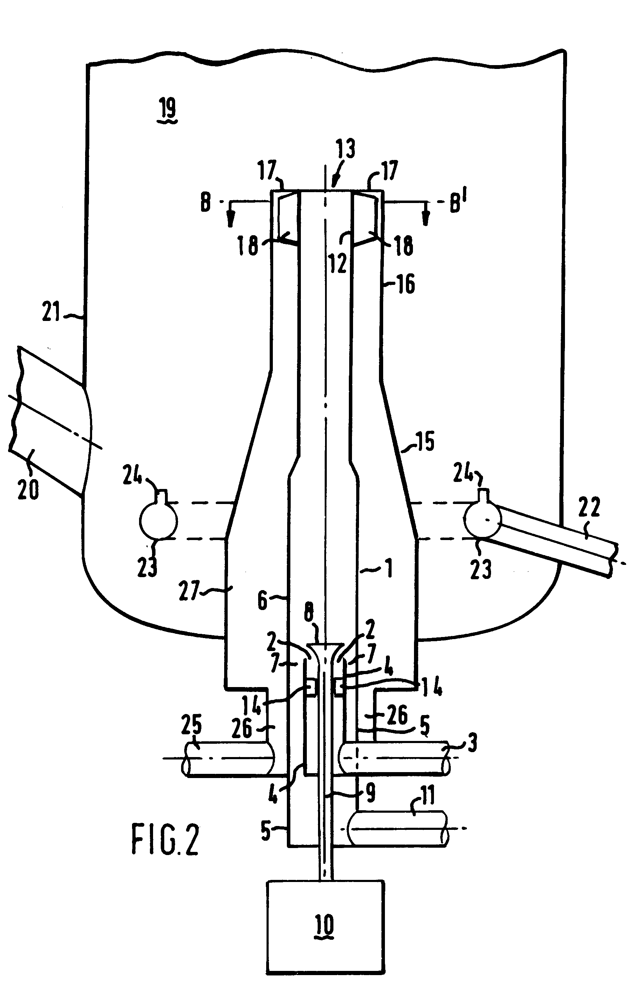

In Figure 2 another embodiment of the apparatus according to the invention is shown which, in addition to the elements already described in connection with Figure 1, comprises a shielding means (15) which preferably comprises at least one tubular section (16) (most preferably coaxially surrounding the downstream part (12) of tubular mixing section (1), thus defining annular opening (17) provided with vanes (18). A single outlet opening (13) for a fluid mixture is located at the downstream and of section (1). Positioning rod (9) is preferably guided by (e.g. ring-shaped) directed means (14) arranged at least in the upper section inside the tubular feed inlet means (4).

The invention furthermore relates to a process for mixing a first fluid comprising hydrocarbonaceous material and a second fluid comprising steam (e.g. for introduction into a reaction zone such as a fluid catalytic cracking zone (19) operated at elevated temperature and pressure wherein the first fluid is substantially cracked) which comprises introducing an annular stream of a first fluid (through annular opening (2)) together with an at least partly surrounding stream of a second fluid via inlet (11) into the upstream end (6) of a tubular mixing zone (1) and removing a fluid mixture from the downstream end (12) of the tubular mixing zone (1) (e.g. by passing said mixture to the reaction zone (19) wherein deflection means are provided at the upstream end part of the mixing section comprising an inverted at least partly frusto-conical body such that the first fluid is broken up substantially completely after entering the upstream end part of the tubular mixing section through an annular opening surrounded by the second fluid which effects shearing and atomizing of the first fluid stream. The mixing process can be carried out within a very wide temperature range, provided, of course, that none of the applied fluids solidifies into large particles. Fluids such as those applied in a catalytic cracking process are preferably mixed at temperatures from 0-600 °C, most preferably from 10-400 °C. The mixing process is preferably carried out at elevated pressures, most preferably from 2-100 bar abs. and in particulate from 6-50 bar abs.

A fluid catalytic cracking process is preferably carried out at temperature from 400-800 °C and pressures from 1.5-10 bar abs. Such a process is advantageously carried out in an apparatus for fluid catalytic cracking of hydrocarbonaceous material as referred to hereinbefore and partly depicted in Figure 2 by introducing a stream of catalyst particles (e.g. originating from a catalyst regenerator) through inlet (20) into the bottom section (21) of a riser reactor. The catalyst particles are fluidized and transported upwardly around shielding means (15) and shield tube (16) by means of steam (or another gas) introduced via line (22) into ring-shaped or annular fluidization means (23) provided with regularly spaced fluidization gas nozzles (24). The upwardly flowing fluidized mass of catalyst particles is excellently mixed with a mixture of at least partly atomized hydrocarbon feed and steam emanating with a relatively high velocity from outlet opening (13). A cooling gas (e.g. low pressure steam) can be introduced through line (25) and annular cooling gas inlet space (26) into space (27) and removed through annular opening (17).

The use of a single tubular mixing section (1) which is centrally located in the bottom section of a riser reactor leads to very uniform mixing in a relatively short period of time; consequently the length of the riser reactor section in which the solid (catalyst) particles are mixed with hydrocarbon feed is relatively short, resulting in optimal use of the remaining (upper) section of the riser reactor for the actual catalytic cracking.

Moreover, by carrying out the process according to the present invention only a relatively small amount of gas (e.g. steam) is required for injecting a given quantity of liquid. In addition, coke formation on the catalyst particles and on the walls of the reaction zone and the mixing means is reduced as a result of the optimal distribution of hydrocarbon feed over said particles in the reaction zone.

The invention furthermore relates to hydrocarbons obtained by a process as described hereinbefore.

The invention is illustrated by means of the following Example.

### Example

A feed stream of heavy hydrocarbon oil enters inlet (3) of the apparatus as depicted in Figure 2 at a temperature of 250 °C and a pressure of 12 bar abs. and is mixed in tubular mixing section (1) having a length of 3 m and a diameter of 0.20 m with steam introduced via inlet (11) at a temperature of 300 °C and a pressure of 8 bar abs. The resulting oil/steam mixture flows with a velocity of more than 50 m/s through outlet opening (13) into reaction zone (19), which is operated at a pressure of 3 bar abs. and a temperature of 520 °C. Regenerated silica-aluminia based catalyst particles are introduced via inlet (20) at a temperature of 700 °C into reaction zone (19) wherein the catalyst particles are contacted with the oil/steam mixture.

## Claims

1. Apparatus for fluid catalytic cracking of hydrocarbonaceous material which comprises a substantially vertically arranged tubular housing having a tubular mixing section (1) arranged at least partly inside its bottom section, which tubular mixing section has in its upstream end part (6) an annular inlet opening (2) for a first fluid which comprises hydrocarbonaceous material defined inside substantially coaxially arranged inlet means (5) for a second fluid which comprises steam and an outlet opening (13) for a fluid mixture, characterized in that deflection means (8) are provided at the upstream end part (6) of the mixing section which deflection means comprise an inverted at least partly frusto-conical body.

2. Apparatus according to claim 1 wherein tubular inlet means (5) for the second fluid are connected to the upstream end part (6) of the tubular mixing section.

3. Apparatus according to claim 1 wherein an annular inlet opening (7) for the second fluid is defined between the wall of the tubular inlet means for the second fluid (5) and the annular inlet opening (2) for the first fluid.

4. Apparatus according to any of the preceding claims wherein the annular inlet opening (2) for the first fluid is defined inside tubular inlet means (4) for the first fluid arranged substantially coaxially at least partly within the inlet means (5) for the second fluid.

5. Apparatus according to claim 4 wherein the annular inlet opening (2) for the first fluid is defined between the tubular inlet means (4) for the first fluid and deflection means (8) arranged at least partly therein.

6. Apparatus according to claim 5 wherein the deflection means (8) are connected to axially adjustable positioning means (9).

7. Apparatus according to claim 6 wherein the positioning means (9) extend outside the upstream end of tubular inlet means for the first fluid and are connected to actuating means (10).

8. Apparatus according to any of the preceding claims wherein the downstream end of the tubular mixing section (12) comprises a plurality of outlet openings (13) for the fluid mixture.

9. Apparatus according to any of the preceding claims wherein the tubular mixing section (1) has a length:diameter ratio of 2-25, and most preferably of 8-20.

10. Process for mixing a first fluid comprising hydrocarbonaceous material and a second fluid comprising steam for introduction into a fluid catalytic cracking zone (19) wherein the first fluid is subsequently cracked, which process comprises introducing an annular stream of the first fluid together with an at least partly surrounding stream of the second fluid into the upstream end (6) of a tubular mixing section (1) and removing a fluid mixture from the downstream end of the tubular mixing zone, characterized in that deflection means (8) are provided at the upstream end part (6) of the mixing section (1) comprising an inverted at least partly frusto-conical body such that the first fluid is broken up substantially completely after entering the upstream end part of the tubular mixing section (1) through an annular opening (2) surrounded by the second fluid which effects shearing and atomizing of the first fluid stream.

## Patentansprüche

1. Vorrichtung bzw. Apparat zum Cracken von kohlenwasserstoffhaltigem Material mit fließendem Katalysator, umfassend ein im wesentlichen vertikal angeordnetes rohrartiges Gehäuse, welches einen rohrförmigen Mischabschnitt (1) hat, der wenigstens teilweise im Inneren des Bodenabschnitts des Gehäuses angeordnet ist und der in seinem stromaufwärtigen Endteil (6) eine ringförmige Einlaßöffnung (2) für ein erstes Fluid, welches kohlenwasserstoffhaltiges Material aufweist, eine innen im wesentlichen gleichachsig angeordnete Einlaßeinrichtung (5) für ein zweites Fluid, welches Dampf aufweist, und eine Auslaßöffnung (13) für ein Fluidgemisch hat, dadurch gekennzeichnet, daß eine Ablenkeinrichtung (8) am stromaufwärtigen Endteil (6) des Mischabschnitts vorgesehen ist, die einen umgekehrten, wenigstens teilweise kegelstumpfförmigen Körper aufweist.

2. Vorrichtung nach Anspruch 1, wobei die rohrförmige Einlaßeinrichtung (5) für das zweite Fluid mit dem stromaufwärtigen Endteil (6) des rohrförmigen Mischabschnitts verbunden ist.

3. Vorrichtung nach Anspruch 1, wobei eine ringförmige Einlaßöffnung (7) für das zweite Fluid zwischen der Wand der rohrförmigen Einlaßeinrichtung (5) für das zweite Fluid und der ringförmigen Einlaßöffnung (2) für das erste Fluid gebildet ist.

4. Vorrichtung nach irgendeinem der vorhergehenden Ansprüche, wobei die ringförmige Einlaßöffnung (2) für das erste Fluid im Inneren der rohrförmigen Einlaßeinrichtung (4) für das erste Fluid gebildet und im wesentlichen gleichachsig wenigstens teilweise in der Einlaßeinrichtung (5) für das zweite Fluid angeordnet ist.

5. Vorrichtung nach Anspruch 4, wobei die ringförmige Einlaßöffnung (2) für das erste Fluid zwischen der rohrförmigen Einlaßeinrichtung (4) für das erste Fluid und der Ablenkeinrichtung (8) gebildet und wenigstens teilweise darin angeordnet ist.

6. Vorrichtung nach Anspruch 5, wobei die Ablenkeinrichtung (8) mit einer axial einstellbaren Positioniereinrichtung (9) verbunden ist.

7. Vorrichtung nach Anspruch 6, wobei die Positioniereinrichtung (9) sich vom stromaufwärtigen Ende der rohrförmigen Einlaßeinrichtung für das erste Fluid zur Außenseite erstreckt und mit einer Betätigungseinrichtung (10) verbunden ist.

8. Vorrichtung nach irgendeinem der vorhergehenden Ansprüche, wobei das stromabwärtige Ende des rohrförmigen Mischabschnitts (12) eine Mehrzahl von Auslaßöffnungen (13) für das Fluidgemisch aufweist.

9. Vorrichtung nach irgendeinem der vorhergehenden Ansprüche, wobei der rohrförmige Mischabschnitt (1) ein Verhältnis von Länge zu Durchmesser von 2 bis 25, und am meisten bevorzugt von 8 bis 20 hat.

10. Verfahren zum Mischen eines ersten Fluids, welches kohlenwasserstoffhaltiges Material aufweist, und eines zweiten Fluids, welches Dampf aufweist, zum Einführen in eine Crackzone (19) mit fließendem Katalysator, in welcher das erste Fluid nachfolgend gecrackt wird, wobei das Verfahren das Einführen eines ringförmigen Stromes des ersten Fluids zusammen mit einem wenigstens teilweise umgebenden Strom des zweiten Fluids in das stromaufwärtige Ende (6) eines rohrförmigen Mischabschnitts (1) und das Entfernen eines Fluidgemisches aus dem stromabwärtigen Ende der rohrförmigen Mischzone umfaßt, dadurch gekennzeichnet, daß Ablenkmittel (8) am stromaufwärtigen Endteil (6) des Mischabschnitts (1) vorgesehen werden, die einen umgekehrten, wenigstens teilweise kegelstumpfförmigen Körper aufweisen derart, daß das erste Fluid im wesentlichen vollständig aufgebrochen wird nach dem Eintreten in den stromaufwärtigen Endteil des rohrförmigen Mischabschnitts (1) durch eine ringförmige Öffnung (2) hindurch, und zwar umgeben von dem zweiten Fluid, welches ein Abscheren und Zerstäuben des ersten Fluidstromes bewirkt.

## Revendications

1. Appareil pour le craquage catalytique fluide de matières hydrocarbonées qui comprend une enceinte tubulaire disposée sensiblement verticalement possédant une section de mélange tubulaire (1) disposée au moins partiellement dans sa section du bas, cette section de mélange tubulaire ayant dans sa partie d'extrémité amont (6) une ouverture d'entrée annulaire (2) pour un premier fluide qui comprend une matière hydrocarbonée définie à l'intérieur d'un moyen d'entrée (5) disposé sensiblement coaxialement pour un second fluide qui comprend de la vapeur et une ouverture de sortie (13) pour un mélange fluide, caractérisé en ce qu'un moyen de déflexion (8) est installé à la partie d'extrémité amont (6) de la section de mélange, ce moyen de déflexion comprenant un corps inversé au moins partiellement tronconique.

2. Appareil selon la revendication 1, dans lequel le moyen d'entrée tubulaire (5) pour le second fluide est relié à la partie d'extrémité amont (6) de la section de mélange tubulaire.

3. Appareil selon la revendication 1, dans lequel une ouverture d'entrée annulaire (7) pour le second fluide est définie entre la paroi du moyen d'entrée tubulaire pour le second fluide (5) et l'ouverture d'entrée annulaire (2) pour le premier fluide.

4. Appareil selon l'une quelconque des revendications précédentes, dans lequel l'ouverture d'entrée annulaire (2) pour le premier fluide est définie à l'intérieur d'un moyen d'entrée tubulaire (4) pour le premier fluide disposé sensiblement coaxialement au moins partiellement à l'intérieur du moyen d'entrée (5) pour le second fluide.

5. Appareil selon la revendication 4, dans lequel l'ouverture d'entrée annulaire (2) pour le premier fluide est définie entre le moyen d'entrée tubulaire (4) pour le premier fluide et le moyen de déflexion (8) disposé au moins partiellement dans celui-ci.

6. Appareil selon la revendication 5, dans lequel le moyen de déflexion (8) est relié à un moyen de positionnement (9) réglable axialement.

7. Appareil selon la revendication 6, dans lequel le moyen de positionnement (9) s'étend à l'extérieur de l'extrémité amont du moyen d'entrée tubulaire pour le premier fluide et est relié à un moyen d'actionnement (10).

8. Appareil selon l'une quelconque des précédentes revendications, dans lequel l'extrémité aval de la section de mélange tubulaire (12) comprend plusieurs ouvertures de sortie (13) pour le mélange fluide.

9. Appareil selon l'une quelconque des revendications précédentes, dans lequel la section de mélange tubulaire (1) possède un rapport longueur/diamètre compris entre 2 et 25, et de préférence entre 8 et 20.

10. Procédé pour mélanger un premier fluide comprenant une matière hydrocarbonée et un second fluide comprenant de la vapeur pour leur introduction dans une zone de craquage catalytique fluide (19) dans laquelle le premier fluide est craqué ultérieurement, ce procédé comprenant l'introduction d'un courant annulaire du premier fluide en même temps qu'un courant du second fluide l'entourant au moins partiellement dans l'extrémité amont (6) d'une section de mélange tubulaire (1) et l'extraction d'un mélange fluide de l'extrémité aval de la zone de mélange tubulaire, caractérisé en ce qu'un moyen de déflexion (8) est prévu à la partie d'extrémité amont (6) de la section de mélange (1) comprenant un corps inversé au moins partiellement tronconique tel que le premier fluide est fragmenté sensiblement complètement après son entrée dans la partie d'extrémité amont de la section de mélange tubulaire (1) à travers une ouverture annulaire (2) entourée par le second fluide qui effectue le cisaillement et l'atomisation du courant de premier fluide.
